# EUROPÄISCHE PATENTSCHRIFT

(11) **EP 2 089 257 B1**
(45) Veröffentlichungstag und Bekanntmachung des Hinweises auf die Patenterteilung: **28.04.2010**
(21) Anmeldenummer: 07819564.1
(22) Anmeldetag: 03.11.2007
(51) Int. Cl.: B60R 22/405

(54) **SELBSTSPERRENDER GURTAUFROLLER MIT AN DER ABDECKKAPPE GELAGERTER STEUERSCHEIBE**
SELF-LOCKING SEATBELT RETRACTOR WITH A CONTROL DISC MOUNTED ON THE COVERING CAP
ENROULEUR DE CEINTURE AUTOBLOQUANT AVEC DISQUE DE COMMANDE MONTE SUR LE CAPUCHON DE RECOUVREMENT

(30) Priorität: 16.11.2006 DE 102006054537
(43) Veröffentlichungstag der Anmeldung: 19.08.2009
(73) Patentinhaber: Autoliv Development AB, 447 83 Vargarda (SE)
(72) Erfinder: KRÖGER, Doris, 25436 Tornesch (DE); BUTENOP, Klaus, 25379 Herzhorn (DE)
(74) Vertreter: Müller, Karl-Ernst
(86) Internationale Anmeldenummer: PCT/EP2007/009541
(87) Internationale Veröffentlichungsnummer: WO 2008/058642

(56) Entgegenhaltungen:
- EP-A- 0 093 233
- WO-A-99/59847
- DE-A1- 10 027 134

## Beschreibung

Die Erfindung betrifft einen selbstsperrender Gurtaufroller, insbesondere für Kraftfahrzeuge, mit einem fahrzeugsensitiven und/oder gurtbandsensitiven Steuersystem für die eine in eine gehäusefeste Verzahnung einsteuerbare Zahnscheibe aufweisende Blockiereinrichtung des Gurtaufrollers, wobei das Steuersystem eine sich mit der Gurtwelle drehende, an die Zahnscheibe gekoppelte Steuerscheibe mit einer Verzahnung zum Zusammenwirken mit einem einen Sensorhebel aufweisenden Fahrzeugsensor umfasst, und wobei eine das Steuersystem des Gurtaufrollers übergreifende Abdeckkappe an dem Gurtaufrollergehäuse festgelegt und der Fahrzeugsensor an der Innenseite der Abdeckkappe gehaltert ist.

Ein selbstsperrender Gurtaufroller mit den vorgenannten Merkmalen ist aus der DE 100 27 134 A1 bekannt. Da bei dem vorbekannten Gurtaufroller die Steuerscheibe auf einem Wellenfortsatz der Gurtwelle gelagert und der Fahrzeugsensor an der Innenseite der Abdeckkappe festgelegt ist, entsteht in nachteiliger Weise eine entsprechend große axiale Toleranz zwischen dem Sensorhebel des Fahrzeugsensors und der zugeordneten Verzahnung der Steuerscheibe, so dass ein sicherer Eingriff des Sensorhebels in die Steuerscheibenverzahnung nicht in allen Montage- und Betriebszuständen des Gurtaufrollers gewährleistet ist. Dieser Nachteil wird dadurch verstärkt, dass aufgrund des notwendigen Lagerspiels der Gurtwelle in deren in der Abdeckkappe ausgebildeten Lagerstelle einerseits und aufgrund des notwendigen Lagerspiels der Lagerung der Steuerscheibe auf der Gurtwelle andererseits es zu einer Schrägstellung der Steuerscheibe beziehungsweise zu einem Taumeln der Steuerscheibe bei ihrer Drehbewegung kommen kann. Ein derartiges Taumeln der Steuerscheibe hat unterschiedliche Abstände zwischen der Spitze des Sensorhebels und der Verzahnung der Steuerscheibe zur Folge, wodurch die Sicherheit des Eingriffs des Sensorhebels in die Steuerscheibenverzahnung eingeschränkt sein kann. Dies gilt insbesondere bei Ausbildung einer axial ausgerichteten Verzahnung an der Steuerscheibe und der Anordnung des Fahrzeugsensors in einer sogenannten 90° - Einbaulage.

Der Erfindung liegt daher die Aufgabe zugrunde, bei einem selbstsperrenden Gurtaufroller mit den gattungsgemäßen Merkmalen die vorgenannten Nachteile zu beseitigen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Steuerscheibe drehbar an der Abdeckkappe gelagert ist. Mit der Erfindung ist der Vorteil verbunden, dass der Fahrzeugsensor und die Steuerscheibe aufgrund ihrer gemeinsamen Anordnung an der Abdeckkappe nun die gleiche Basis aufweisen, so dass sie in einer definierten Zuordnung zueinander montiert werden. Damit ist auch die axiale Toleranzkette zwischen dem Sensorhebel und der zugeordneten Verzahnung der Steuerscheibe erheblich verringert. Ein weiterer Vorteil ergibt sich daraus, dass die Abdeckkappe mit Steuerscheibe und Fahrzeugsensor als Baugruppe vormontiert und bereits ohne Zuordnung zur Gurtwelle und dem Gurtaufrollergehäuse bezüglich g-Wert und Kippwinkel eingestellt und geprüft werden kann. Damit ist es möglich, dass die Fertigung von einzelnen Gurtaufroller-Modulen, insbesondere des die fahrzeugsensitive und auch gurtbandsensitive Steuerung umfassende Steuermoduls in Form der Abdeckkappe mit daran vormontierten Bauteilen an unterschiedlichen Fertigungsorten stattfinden kann. Die Verbindung des derartig vormontierten Steuermoduls mit den übrigen Funktionsgruppen des Gurtaufrollers findet dann lediglich über die koppelnde Verbindung zwischen Steuerscheibe und der Zahnscheibe der Blockiereinrichtung des Gurtaufrollers statt.

Nach einem Ausführungsbeispiel der Erfindung ist vorgesehen, dass die Steuerscheibe unverlierbar auf einem an der Abdeckkappe ausgebildeten Lagerzapfen gehaltert ist. Da ein derartiger Lagerzapfen eine entsprechende axiale Länge aufweisen kann, wird ein Taumeln der Steuerscheibe verhindert, und es wird insbesondere ein Eingriff des Sensorhebels des Fahrzeugsensors in einem Winkel von 90° zur Drehachse der Steuerscheibe ermöglicht.

Zur Erleichterung der Montage kann vorgesehen sein, dass die Steuerscheibe mit dem Lagerzapfen verklippst ist.

Abgesehen von der aus dem gattungsbildenden Stand der Technik bekannten Außenverzahnung der Steuerscheibe kann vorgesehen sein, dass die Steuerscheibe eine radiale Verzahnung zum Eingriff des Sensorhebels des Fahrzeugsensors aufweist.

Hinsichtlich der Ausbildung der Kopplungsverbindung zwischen der Zahnscheibe und der Steuerscheibe kann vorgesehen sein, dass ein Mitnehmerzapfen Teil der Zahnscheibe ist und in eine an der Steuerscheibe ausgebildete Öffnung eingreift oder alternativ dass der Mitnehmerzapfen Teil der Steuerscheibe ist und in eine an der Zahnscheibe ausgebildete Öffnung eingreift.

Soweit der Steuerscheibe auch eine Funktion im Rahmen des gurtbandsensitiven Steuersystems zukommt, ist nach einem Ausführungsbeispiel der Erfindung vorgesehen, dass eine einen Bestandteil des gurtbandsensitiven Steuersystems bildende g-Wert-Feder in der topfförmig ausgebildeten Steuerscheibe angeordnet und mit ihrem einen Ende an der Steuerscheibe festgelegt ist, und dass ein an der Gurtwelle angebrachter und von dieser axial abstehender Fangzapfen einen am anderen Ende der g-Wert-Feder ausgebildeten Fanghaken erfasst.

Hinsichtlich der Ausbildung des gurtbandsensitiven Sensors ist nach einem Ausführungsbeispiel der Erfindung vorgesehen, dass die Steuerscheibe eine Massenträgheit aufweist und zusammen mit der g-Wert-Feder den gurtbandsensitiven Sensor bildet.

In der Zeichnung ist ein Ausführungsbeispiel der Erfindung wiedergegeben, welches nachstehend beschrieben ist. Es zeigen:
- Fig. 1: einen selbstsperrenden Sicherheitsgurtaufroller in einer Perspektivansicht auf seine Steuerseite mit teilweise weggeschnittener Abdeckkappe,
- Fig. 2: die Abdeckkappe gemäß der Darstellung in Figur 1 in einer anderen, vergrößerten Perspektivansicht.

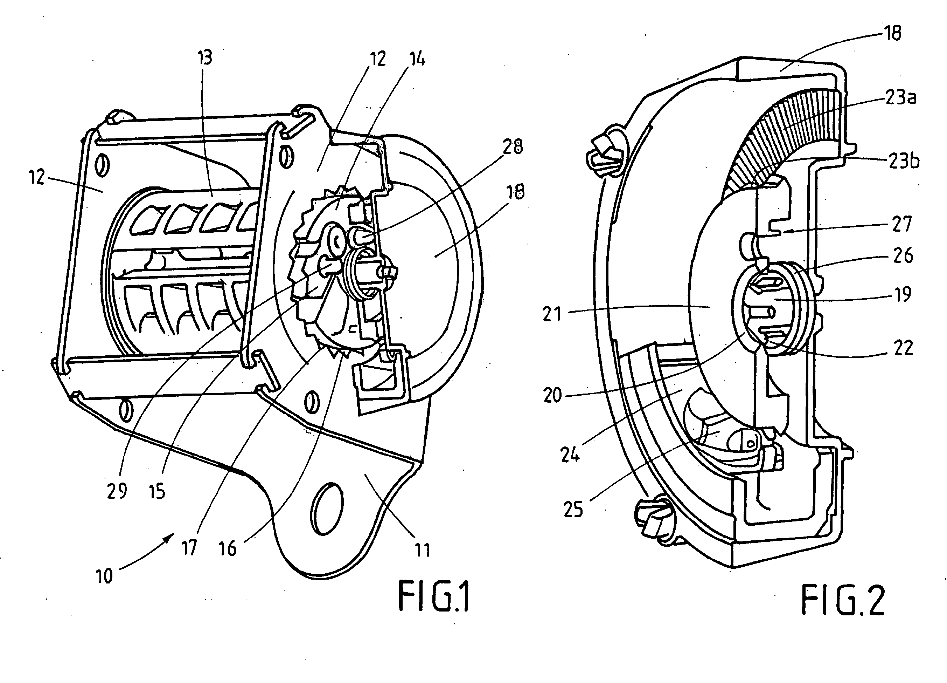

Der aus Figur 1 ersichtliche Gurtaufroller 10 hat ein U-förmiges Gehäuse 11 mit Seitenschenkeln 12, in denen eine Gurtwelle 13 gelagert ist. Die Gurtwelle 13 durchstößt mit einem Profilkopf 14 einen Durchbruch 16 in dem zugeordneten Seitenschenkel 12 des Gehäuses 11, wobei der innere Umfang des Durchbruches 16 mit einer Verzahnung 17 versehen ist. An dem Profilkopf 14 ist eine Zahnscheibe 15 radial ausschwenkbar bis zum Eingriff in die Verzahnung 17 des Seitenschenkels 12 gelagert, so dass sich bei innerhalb der Kontur des Profilkopfes 14 liegender Zahnscheibe 15 die Gurtwelle 13 ungehindert in dem Gehäuse 11 drehen kann, während bei radial in Eingriff mit der Verzahnung 17 ausgelenkter Zahnscheibe 15 die Gurtwelle 13 in ihrer weiteren Drehung blockiert ist.

Zur Steuerung der Auslenkbewegung der Zahnscheibe 15 ist ein auf die Außenseite des Gehäuses aufsetzbares und damit vorzugsweise mittels einer Klipsverbindung zu verbindendes Steuermodul vorgesehen, welches aus einer Abdeckkappe 18 besteht, an deren Innenseite eine Steuerscheibe 21 sowie ein Fahrzeugsensor 25 gehaltert sind. Hierzu ist die Abdeckkappe 18 topfförmig mit einem axial vorstehenden Rand ausgebildet, so dass die Steuerscheibe 21 und der Fahrzeugsensor 25 im Inneren des von der Abdeckkappe 18 umschlossenen Raumes angeordnet sind.

Im einzelnen ist an der Abdeckkappe 18 ein Lagerzapfen 19 ausgebildet, der an seinem axialen Ende einen radial abstehenden Flansch 20 aufweist. Auf dem Lagerzapfen 19 ist die Steuerscheibe 21 drehbar gelagert, die mittels den Flansch 20 hintergreifender Klipsvorsprünge 22 unverlierbar an der Abdeckkappe 18 festlegbar ist. Die Steuerscheibe 21 weist auf ihrem äußeren Umfang eine radial ausgerichtete Verzahnung 23b auf, in welche ein nicht weiter dargestellter Sensorhebel des Fahrzeugsensors 25 bei entsprechender Ausschwenkung eingreift, wobei der Fahrzeugsensor 25 mittels eines Adapters 24 an der Abdeckkappe 18 festgelegt ist. Der Adapter 24 mit dem Fahrzeugsensor 25 kann in unterschiedlichen Positionen über eine an der Abdeckkappe 18 ausgebildete Axialverzahnung 23a festgelegt sein, so dass der Gurtaufroller ohne weitere Änderungen für verschiedene Einbaulagen eingesetzt werden kann. Im Inneren der topfförmig ausgelegten Steuerscheibe 21 ist eine einen Bestandteil des gurtband-sensitiven Steuersystems bildende g-Wert-Feder 26 angeordnet, die mit ihrem einen, inneren Ende an der Steuerscheibe 21 festgelegt ist. Das äußere Ende der spiralförmigen g-Wert-Feder 26, welche den Lagerzapfen 19 umschließend in der Steuerscheibe 21 angeordnet ist, ist in einen abstehenden Fanghaken 27 gebogen. Bei an dem Seitenschenkel 12 des Gehäuses 11 montierter Abdeckkappe 18 greift ein an der Gurtwelle 13 befindlicher und von dieser axial abstehender Fangzapfen 28 durch eine Ausnehmung in dem Boden der Steuerscheibe 21 hindurch und erfasst den Fanghaken 27 der g-Wert-Feder 26.

Wie nicht weiter dargestellt, sind die Steuerscheibe 21 und die Zahnscheibe 15 dadurch aneinander gekoppelt, dass ein an der Zahnscheibe 15 befindlicher und von dieser axial zur Steuerscheibe 21 hin vorstehender Mitnehmerzapfen 29 in einem in der Steuerscheibe 21 in an sich bekannter Weise ausgebildeten Langloch geführt ist, so dass eine Relativdrehung zwischen der Steuerscheibe 21 und der mit der Gurtwelle 13 umlaufenden Zahnscheibe 15 eine radiale Auslenkung der Zahnscheibe 15 in Eingriff mit der Verzahnung 17 herbeiführt.

Im einzelnen wird bei normalem Gurtbandauszug beziehungsweise Gurtbandeinzug und den dadurch bewirkten Drehbewegungen der Gurtwelle 13 über die Kopplung an die Zahnscheibe 15 die Steuerscheibe 21 in Drehung versetzt und dreht sich gemeinsam mit der Gurtwelle mit. Kommt es nun beispielsweise zu einem Ansprechen des Fahrzeugsensors 25 aufgrund einer Fahrzeugverzögerung beziehungsweise Fahrzeugbeschleunigung, so greift der Sensorhebel des Fahrzeugsensors 25 in die Verzahnung 23b der Steuerscheibe 21 ein und hält damit die Steuerscheibe 21 in ihrer Drehung an. Hierdurch kommt es zu einer Relativdrehung zwischen der nunmehr feststehenden Steuerscheibe 21 und der sich weiterdrehenden Gurtwelle 13, und diese Relativdrehung wird in die Auslenkung der Zahnscheibe 15 umgesetzt. Der gleiche Bewegungsablauf vollzieht sich, wenn aufgrund eines sehr schnellen Gurtbandauszuges unter Spannung der g-Wert-Feder 26 die mit einer entsprechenden Masseträgheit ausgelegte Steuerscheibe 21 in ihrer Drehbewegung hinter der schnellen Drehung der Gurtwelle 13 zurückbleibt, so dass es ebenfalls zu der angesprochenen Relativdrehung kommt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller (10), insbesondere für Kraftfahrzeuge, mit einem fahrzeugsensitiven und/oder gurtbandsensitiven Steuersystem für die eine in eine gehäusefeste Verzahnung (17) einsteuerbare Zahnscheibe (15) aufweisende Blockiereinrichtung des Gurtaufrollers (10), wobei das Steuersystem eine sich mit der Gurtwelle (13) drehende, an die Zahnscheibe (15) gekoppelte Steuerscheibe (21) mit einer Verzahnung (23b) zum Zusammenwirken mit einem einen Sensorhebel aufweisenden Fahrzeugsensor (25) umfasst, und wobei eine das Steuersystem des Gurtaufrollers (10) übergreifende Abdeckkappe (18) an dem Gurtaufrollergehäuse festgelegt und der Fahrzeugsensor (25) an der Innenseite der Abdeckkappe (18) gehaltert ist, **dadurch gekennzeichnet, dass** die Steuerscheibe (21) drehbar an der Abdeckkappe (18) gelagert ist.

2. Selbstsperrender Gurtaufroller nach Anspruch 1, **dadurch gekennzeichnet, dass** die Steuerscheibe (21) unverlierbar auf einem an der Abdeckkappe (18) ausgebildeten Lagerzapfen (19) gehaltert ist.

3. Selbstsperrender Gurtaufroller nach Anspruch 2, **dadurch gekennzeichnet, dass** die Steuerscheibe (21) mit dem Lagerzapfen (19) verklippst ist.

4. Selbstsperrender Gurtaufroller nach einem der Ansprüche 1 bis 3, **dadurch gekennzeichnet, dass** die Steuerscheibe (21) eine radiale Verzahnung (23b) zum Eingriff des Sensorhebels des Fahrzeugsensors (25) aufweist.

5. Selbstsperrender Gurtaufroller nach einem der Ansprüche 1 bis 4, **dadurch gekennzeichnet, dass** zur Kopplung von Zahnscheibe (15) und Steuerscheibe (21) ein Mitnehmerzapfen (29) Teil der Zahnscheibe (15) ist und in eine an der Steuerscheibe (21) ausgebildete Öffnung eingreift.

6. Selbstsperrender Gurtaufroller nach einem der Ansprüche 1 bis 4, **dadurch gekennzeichnet, dass** zur Kopplung von Zahnscheibe (15) und Steuerscheibe (21) ein Mitnehmerzapfen Teil der Steuerscheibe (21) ist und in eine an der Zahnscheibe (15) ausgebildete Öffnung eingreift.

7. Selbstsperrender Gurtaufroller nach einem der Ansprüche 1 bis 6, **dadurch gekennzeichnet, dass** eine einen Bestandteil des gurtbandsensitiven Steuersystems bildende g-Wert-Feder (26) in der topfförmig ausgebildeten Steuerscheibe (21) angeordnet und mit ihrem einen Ende an der Steuerscheibe (21) festgelegt ist, und dass ein an der Gurtwelle (10) angebrachter und von dieser axial abstehender Fangzapfen (28) einen am anderen Ende der g-Wert-Feder (26) ausgebildeten Fanghaken (27) erfasst.

8. Selbstsperrender Gurtaufroller nach Anspruch 7, **dadurch gekennzeichnet, dass** die Steuerscheibe (21) eine Massenträgheit aufweist und zusammen mit der g-Wert-Feder (26) den gurtbandsensitiven Sensor bildet.

## Claims

1. Self-locking seatbelt retractor (10), in particular for motor vehicles, with a vehicle-sensitive and/or seatbelt-strap-sensitive control system for the locking device of the seatbelt retractor (10), which locking device has a tooth lock washer (15) which can be inserted into a toothing (17) fixed on the housing, the control system comprising a disc cam (21) which rotates together with the seatbelt shaft (13), is coupled to the tooth lock washer and has a toothing (23b) for interaction with a vehicle sensor (25), which has a sensor lever, and a covering cap (18) which engages over the control system of the seatbelt retractor (10) being fixed on the seatbelt retractor housing, and the vehicle sensor (25) being secured on the inside of the covering cap (18), **characterized in that** the disc cam (21) is mounted rotatably on the covering cap (18).

2. Self-locking seatbelt retractor according to Claim 1, **characterized in that** the disc cam (21) is secured captively on a bearing pin (19) formed- on the covering cap (18).

3. Self-locking seatbelt retractor according to Claim 2, **characterized in that** the disc cam (21) is clipped to the bearing pin (19).

4. Self-locking seatbelt retractor according to one of Claims 1 to 3, **characterized in that** the disc cam (21) has a radial toothing (23b) for the engagement of the sensor lever of the vehicle sensor (25).

5. Self-locking seatbelt retractor according to one of Claims 1 to 4, **characterized in that**, in order to couple tooth lock washer (15) and disc cam (21), a driver pin (29) is part of the tooth lock washer (15) and engages in an opening formed on the disc cam (21).

6. Self-locking seatbelt retractor according to one of Claims 1 to 4, **characterized in that**, in order to couple tooth lock washer (15) and disc cam (21), a driver pin is part of the disc cam (21) and engages in an opening formed on the tooth lock washer (15).

7. Self-locking seatbelt retractor according to one of Claims 1 to 6, **characterized in that** a g-value spring (26) forming part of the seatbelt-strap-sensitive control system is arranged in the disc cam (21), which is of cup-shaped design, and is fixed at its one end on the disc cam (21), and **in that** a catch pin (28) which is fitted on the seatbelt shaft (10) and protrudes axially therefrom grasps a catch hook (27) formed at the other end of the g-value spring (26).

8. Self-locking seatbelt retractor according to Claim 7, **characterized in that** the disc cam (21) has inertia and together with the g-value spring (26) forms the seatbelt-strap-sensitive sensor.

## Revendications

1. Enrouleur de ceinture (10) autobloquant, en particulier pour des véhicules automobiles avec un système de commande sensible au véhicule et/ou sensible à la bande de ceinture pour le dispositif de blocage présentant un disque denté (15) pouvant être commandé dans une denture (17) fixée au boîtier de l'enrouleur de ceinture (10), le système de commande comportant un disque de commande (21) couplé au disque denté (15), tournant avec l'arbre de ceinture (13) avec une denture (23b) pour la coopération avec un capteur de véhicule (25) présentant un levier de capteur et un capuchon (18) recouvrant le système de commande de l'enrouleur de ceinture (10) étant fixé sur le boîtier d'enrouleur de ceinture et le capteur de véhicule (25) étant maintenu sur le côté intérieur du capuchon (18), **caractérisé en ce que** le disque de commande (21) est logé de manière rotative sur le capuchon (18).

2. Enrouleur de ceinture autobloquant selon la revendication 1, **caractérisé en ce que** le disque de commande (21) est maintenu de manière imperdable sur un tourillon (19) réalisé sur le capuchon (18).

3. Enrouleur de ceinture autobloquant selon la revendication 2, **caractérisé en ce que** le disque de commande (21) est clipsé avec le tourillon (19).

4. Enrouleur de ceinture autobloquant selon l'une quelconque des revendications 1 à 3, **caractérisé en ce que** le disque de commande (21) présente une denture (23b) radiale pour l'engagement du levier du capteur de véhicule (25).

5. Enrouleur de ceinture autobloquant selon l'une quelconque des revendications 1 à 4, **caractérisé en ce que** pour le couplage du disque denté (15) et du disque de commande (21), un dé d'entraînement (29) fait partie du disque denté (15) et s'engage dans une ouverture réalisée sur le disque de commande (21).

6. Enrouleur de ceinture autobloquant selon l'une quelconque des revendications 1 à 4, **caractérisé en ce que** pour le couplage du disque denté (15) et du disque de commande (21), un dé d'entraînement fait partie du disque de commande (21) et s'engage dans une ouverture réalisée sur le disque denté (15).

7. Enrouleur de ceinture autobloquant selon l'une quelconque des revendications 1 à 6, **caractérisé en ce qu'**un ressort de valeur g (26) formant un composant du système de commande sensible à la bande de ceinture est disposé dans le disque de commande (21) réalisé en forme de pot et est fixé avec l'une de ses extrémités sur le disque de commande (21), et **en ce qu'**un tenon d'arrêt (28) monté sur l'arbre de ceinture (10) et dépassant axialement de celui-ci détecte un crochet d'arrêt (27) réalisé sur l'autre extrémité du ressort de valeur g (26).

8. Enrouleur de ceinture autobloquant selon la revendication 7, **caractérisé en ce que** le disque de commande (21) présente une inertie de masse et forme conjointement avec le ressort de valeur g (26) le capteur sensible à la bande de ceinture.
